Europäisches Patentamt

European Patent Office

Office européen des brevets

(11) Veröffentlichungsnummer : **0 120 190**
**B1**

# EUROPÄISCHE PATENTSCHRIFT

(45) Veröffentlichungstag der Patentschrift :
29.07.87

(21) Anmeldenummer : 84100352.8

(22) Anmeldetag : 14.01.84

(51) Int. Cl.⁴ : **B 60 K 41/06**

(54) Kontrolleinrichtung für ein von einem Motor über ein Getriebe angetriebenes Fahrzeug.

(30) Priorität : 28.03.83 DE 3311254

(43) Veröffentlichungstag der Anmeldung :
03.10.84 Patentblatt 84/40

(45) Bekanntmachung des Hinweises auf die Patenterteilung : 29.07.87 Patentblatt 87/31

(84) Benannte Vertragsstaaten :
AT CH DE FR GB IT LI NL SE

(56) Entgegenhaltungen :
EP-A- 0 007 881
DE-A- 2 836 082
DE-A- 2 852 195
DE-A- 3 018 032
DE-A- 3 101 056
DE-A- 3 240 236
DE-A- 3 246 201
FR-A- 2 435 635
GB-A- 2 053 387

(73) Patentinhaber : WABCO Westinghouse Fahrzeugbremsen GmbH
Am Lindener Hafen 21 Postfach 91 12 80
D-3000 Hannover 91 (DE)

(72) Erfinder : Der Erfinder hat auf seine Nennung verzichtet

(74) Vertreter : Schrödter, Manfred
WABCO Westinghouse Fahrzeugbremsen GmbH Am
Lindener Hafen 21 Postfach 91 12 80
D-3000 Hannover 91 (DE)

0 120 190

**Beschreibung**

Die Erfindung bezieht sich auf eine Kontrolleinrichtung für ein von einem Motor über ein vorzugsweise abgestuftes Getriebe angetriebenes Fahrzeug gemäß dem Oberbegriff des Patentanspruchs 1.

Beim manuellen Schalten eines Getriebes für ein Fahrzeug, insbesondere für ein Straßen-Nutzfahrzeug kommt es vor, daß das Drehmoment im neu eingelegten Gang nicht ausreicht, um das Fahrzeug in der vor dem Gangwechsel vorhandenen Geschwindigkeit weiterfahren zu lassen. Es muß daher wieder zurückgeschaltet werden. Das Einschätzen und Voraussehen einer solchen Situation durch den Fahrzeug-Führer ist schwierig und ungenau. Falsche Gangwechsel bedeuten jedoch, daß das Fahrzeug unwirtschaftlich, insbesondere mit zu hohem Kraftstoff-Verbrauch gefahren wird.

Die beschriebenen Situationen können auch bei automatisch arbeitenden Getrieben auftreten. Diese Getriebe sind deshalb so ausgelegt, daß nur bei hoher Leistungsreserve geschaltet wird. Dies bedeutet ebenfalls eine unwirtschaftliche Fahrweise.

Die Auswahl des günstigsten Betriebspunktes einer aus einem Motor und einem Getriebe bestehenden Antriebseinheit ist von vielen Faktoren abhängig. Selbst die Definition des « günstigsten Betriebspunktes » ist schwierig, da der Punkt günstigsten Verbrauchs im Kennlinienfeld eines Motors in der Regel nicht der Punkt maximaler Leistung ist. Je nach Anforderungen und äußeren Bedingungen müssen die Gangauswahlkriterien zwischen den verschiedenen als « günstig » eingestuften Betriebspunkten variiert werden.

Die Qualität dieser Kriterien ist von der Konstanz der verwendeten Größen abhängig. Werden beispielsweise Motormomente ermittelt, dann sind diese unter anderem abhängig von der Kraftstoffdichte, von der Höhenlage, in der der Motor betrieben wird, von der Kraftstoffqualität, von der Motortemperatur usw. Werden die Motormomente mit nach theoretischen oder empirischen Methoden ermittelten konstanten Werten verglichen, dann wird das Ergebnis bei Auftreten einer Abweichung eines der vielen Einflußfaktoren einen Fehler aufweisen.

Eine naheliegende Lösung ist es nun, möglichst viele der wichtigsten Einflußgrößen mit eigenen Sensoren zu erfassen und auszuwerten, was einen großen Aufwand erfordert.

Die Genauigkeit, mit der ein Wert ermittelt wird, ist bei der Ermittlung von Schaltpunkten, insbesondere bei mit großem Last-/Leerverhältnis betriebenen Nutzfahrzeugen, von Bedeutung. Sollen beispielsweise die bei konstanter Geschwindigkeit am Fahrzeug auftretenden Fahrwiderstände genau ermittelt werden, dann müßten Größen wie Veränderungen des Luftwiderstandsbeiwertes $C_W$ durch Aufbauänderungen, Luftdichte, Änderungen der Rollreibung der Reifen auf der Straße bei unterschiedlichen Reifenprofilen und unterschiedlichem Verschleißzustand, Straßenprofil usw. erfaßt werden. Hinzu kommt, daß bestimmte Größen wie Lagerreibung und Getriebe-Wirkungsgrad sich an Serienfahrzeugen ohne großen Aufwand nicht ermitteln lassen.

Der Erfindung liegt die Aufgabe zugrunde, genaue Schaltpunkte für ein Fahrzeug-Getriebe zu ermitteln, wobei möglichst wenig Peripherie-Geräte (Sensoren) eingesetzt werden sollen. Dabei soll die Möglichkeit geschaffen werden, einen neuen Gang zu bestimmen, bei dem eine Motorleistungszumessung besteht, die der jeweiligen Fahrsituation angepaßt ist.

Diese Aufgabe wird von der im Patentanspruch 1 angegebenen Erfindung gelöst. Vorteilhafte Ausführungsbeispiele und Weiterbildungen der Erfindung sind in den Unteransprüchen angegeben.

Die Merkmale a) bis c) des Anspruchs 1, mit der die Gewichtsermittlung erfolgt, sind bereits in der älteren EP-A-111 636 enthalten.

Die Erfindung geht von der folgenden Erkenntnis aus : Zu jedem beliebigen Zeitpunkt setzt sich das fahrzeugantreibende momentane Antriebsmoment $M_A$ zusammen aus einem stationären Antriebsmoment $M_{stat}$, das zur Weiterfahrt des Fahrzeugs ohne Beschleunigung oder Verzögerung des Fahrzeugs erforderlich ist, und einem eine Beschleunigung oder Verzögerung des Fahrzeugs bewirkenden Beschleunigungsmoment $M_b$. Dies bedeutet, daß das stationäre Antriebsmoment $M_{stat}$ wie folgt berechnet werden kann :

$$M_A = M_{stat} + M_b$$
$$M_b = G \cdot f\,(\ddot{s})$$
$$M_{stat} = M_A - G \cdot f\,(\ddot{s})$$

wenn die Größen $M_A$, G und $\ddot{s}$ vorliegen bzw. gemessen werden können. Im einzelnen bedeuten :

$$M_{stat} = \text{stationäres Antriebsmoment}$$
$$M_A = \text{momentanes Antriebsmoment}$$
$$M_b = \text{Beschleunigungsmoment}$$
$$G = \text{Gewicht des Fahrzeugs}$$
$$\ddot{s} = \text{Beschleunigung des Fahrzeugs}$$

Der Ausdruck $f\,(\ddot{s})$ bedeutet, daß die Fahrzeug-Beschleunigung mit einem Faktor versehen sein kann.

2

Alle Größen können aus den tatsächlichen Werten abgeleitet sein.

Das stationäre Moment $M_{stat}$ kann als die Summe der Fahrwiderstände bei geschwindigkeitskonstanter Fahrt aufgefaßt werden. Diese Fahrwiderstände sind die Rollreibung, die Luftreibung und der Steigungswiderstand.

Da die in der Formel für $M_{stat}$ stehenden Größen leicht ermittelt werden können, läßt sich so die umständliche und ungenaue Erfassung der einzelnen Fahrwiderstände umgehen.

Das zur Auswertung von $M_{stat}$ notwendige genaue Fahrzeug-Gewicht kann über die Fahrzeug-Beschleunigung, wie in der älteren EP-A-111 636 beschrieben, bestimmt werden. Wesentlich ist, daß das genaue Gewicht bekannt ist, und nicht von einem angenommenen Fahrzeuggewicht ausgegangen wird (z. B. DE-A-30 18 032, DE-A-31 01 056).

In der DE-A-30 18 032 werden in Gleichungszusammenhängen die Fahrzustände beschrieben und Annahmen über Werte von Fahrwiderständen, Teile von Fahrwiderständen und die Masse des Fahrzeugs eingeführt. Die Verwendung von physikalische Zusammenhänge beschreibenden Gleichungen, in die angenommene Größen eingeführt werden, kann die Möglichkeit bieten, die angenommenen Größen so umzuformen, daß sich daraus weitere Größen ergeben. Der Anwendungsbereich dieser Größen ist auf bestimmte Fahrsituationen abgestimmt. Außerdem müssen die Werte, mit denen diese Größen verglichen werden, auf empirische Weise angepaßt werden, um Verfälschungen auszuscheiden. Beispielsweise bei Nutzfahrzeugen, die üblicherweise ein sehr großes Last-Leerverhältnis aufweisen und stark untermotorisiert sind, würde eine solche Schaltung in weiten Bereichen unzureichende Ergebnisse liefern.

Um einen sinnvollen, unverfälschten Regel- oder Steuereingriff machen zu können, ist es außerdem wichtig, zu ermitteln, woher beispielsweise eine unzureichende Fahrzeugbeschleunigung kommt. Dies kann am Fahrzeuggewicht, an der gerade vorliegenden Steigung oder an beidem liegen.

In der erfindungsgemäßen Schaltung werden die Größen annahmenfrei bestimmt.

Dieses liegt daran, daß es sich dabei um ein größeres Formelsystem in ganz spezifischer Anordnung und ganz spezifischen Zusammenhängen handelt. Es ist dabei zweckmäßig, die Motormomente über ein Motor-Kennlinienfeld zu ermitteln und die Schwellwerte auf diese Größen zu beziehen, um damit Störeinflüsse von außen auf den Motor auszuschalten.

Insbesondere bei Fahrsituationen, bei denen mit maximaler Leistung bei hohen Motordrehzahlen gefahren wird, aber noch ein oder mehrere höhere Gänge zur Verfügung stehen, ist es schwierig, Kriterien zu finden, die genau genug sind, um eine zweckmäßige Entscheidung für oder gegen ein Umschalten in einen höheren Gang zu treffen. Da in einem solchen Fall nach dem Umschalten weniger Leistung zur Verfügung steht, könnte dieses vom Fahrer des Fahrzeugs als negativ empfunden werden, da sich die Geschwindigkeit des Fahrzeugs verringert. Andererseits würde aber durch die geringe Leistungseinbuße der Kraftstoffverbrauch wesentlich verringert werden. Es muß also ein Kriterium verwendet werden, das genau arbeitet, um vertretbare Leistungseinbußen in einem engen Toleranzbereich halten zu können. Dieses wird durch die erfindungsgemäße Anordnung möglich, da insbesondere die von außen auf den Motor einwirkenden Störungen, durch Bezug der Schwellwerte auf die im Motorkennlinienfeld abgelegten Werte, ausgeschaltet werden.

Es ist zweckmäßig, eine Leistungs- oder Momentenzumessung für das stationäre Antriebsmoment $M_{stat}$ und nicht für das momentane Antriebsmoment $M_A$ während eines Beschleunigungsvorgangs durchzuführen, da der Beschleunigungsvorgang zeitlich begrenzt ist. Damit wird die jeweilige Fahrsituation berücksichtigt. Es werden Fehlschaltungen vermieden.

Weiterhin wird nach der erfindungsgemäßen Ausgestaltung für die Berechnung möglichst aller erforderlichen Größen von einmal festgelegten Werten ausgegangen.

In der vorliegenden Anordnung wird das unter bestimmten Betriebsbedingungen ermittelte Kennlinienfeld des verwendeten Motors, in dem das momentane Antriebsmoment $M_A$ über Motordrehzahl $n_A$ bei verschiedenen Motorsteuerbetriebspunkten aufgetragen ist, in einem Speicher abgelegt. Die theoretisch oder empirisch ermittelten Grenzwerte für die Leistungsbemessung, die zur Erstellung von Schaltkriterien mit beispielsweise dem Wert $M_{stat}$ verglichen werden, beziehen sich ebenfalls auf die Werte des gespeicherten Kennlinienfeldes. Diese Vorgehensweise hat den Vorteil, daß sich bei Verschiebungen des tatsächlichen Kennlinienfeldes z. B. durch veränderte Kraftstoffdichte oder veränderte Höhenlage, das Verhältnis der Größen bei den beschriebenen Wertevergleichen nicht ändert und somit fehlerfreie Werte geliefert werden.

Würde das Motormoment beispielsweise direkt gemessen und mit theoretisch oder empirisch festgelegten Werten verglichen werden, dann müßte bei Veränderungen des Motormomentes durch äußere Einflüsse eine Korrektur der Werte vorgenommen werden, um ein fehlerfreies Ergebnis zu bekommen.

Ein Vergleich von theoretisch oder empirisch ermittelten Momenten mit dem stationären Moment $M_{stat}$ mit vorgegebenen Werten hat folgenden Vorteil :

Wenn vor dem Einlegen eines neuen Ganges geprüft wird, ob das im neuen Gang vorliegende stationäre Antriebsmoment einen der Fahrsituation entsprechenden Differenzbetrag zum stationären Antriebsmoment des gerade eingelegten Ganges nicht überschreitet, läßt sich vorher bestimmen, wie sich das Fahrzeug nach einem Gangwechsel weiterbewegen wird, d. h., ob es sich überhaupt mit der vor dem Gangwechsel vorhandenen Geschwindigkeit und mit einem wirtschaftlichen Kraftstoff-Verbrauch weiter bewegt. Gegebenenfalls wird über eine Sperreinrichtung das Einlegen eines insofern ungünstigen Ganges verhindert.

Unter dem Motor-Kennlinienfeld sind auch Kennlinienfelder zu verstehen, die den Betriebszustand des Motors indirekt beschreiben, wie beispielsweise die Zahlenwerte der Kraftstoffeinspritzzeiten in Abhängigkeit von der Motordrehzahl und dem Motormoment.

Weiterhin sind unter den in den Patentansprüchen enthaltenen « Momenten » auch Antriebsgrößen allgemein zu verstehen, also zum Beispiel auch Leistungsgrößen oder solche vergleichbaren Größen, die die Antriebsmomente lediglich als eine von mehreren Rechengrößen enthalten.

Die Erfindung wird im folgenden anhand einer Zeichnung, die ein Ausführungsbeispiel und ein Diagramm enthält, näher erläutert.

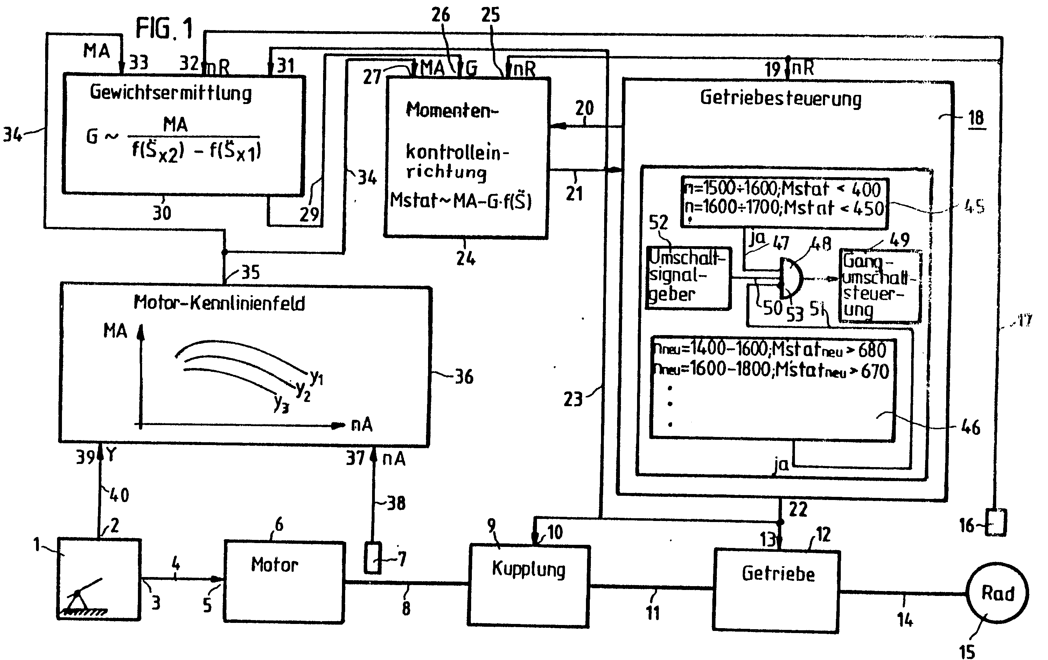

Das Ausführungsbeispiel nach Fig. 1 zeigt in vereinfachter Darstellung die wesentlichen Elemente eines von einer Antriebsmaschine angetriebenen Fahrzeugs. Als Antriebsmaschine dient ein Verbrennungsmotor 6, dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist. Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgröße (Motor-Steuergröße) Y darstellt. Diese Signalgröße Y ist an einem Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann auch — wie im dargestellten Ausführungsbeispiel — als elektrischer oder elektronischer Geber ausgebildet sein, wenn der Motor 6 entsprechend mittels eines Steuersignals steuerbar ist.

Die zwischen der antriebsseitigen Welle 8 und der abtriebsseitigen Welle 11 angeordnete Kupplung 9 ist mittels eines Steuersignals betätigbar, das einem Signaleingang 10 der Kupplung 9 zuführbar ist.

Das Getriebe 12 ist ebenfalls elektrisch steuerbar, wobei Signaleingänge 13 des Getriebes 12 zum Empfang entsprechender Steuersignale zum Einlegen des jeweils gewünschten oder erforderlichen Ganges dienen. Sowohl die Kupplung 9 als auch das Getriebe 12 können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

Zur Steuerung des Getriebes 12 ist eine Getriebesteuerung 18 vorgesehen. Im einfachsten Fall arbeitet diese Getriebesteuerung 18 so, daß das Getriebe 12 in Abhängigkeit von der Geschwindigkeit des Fahrzeugs und somit in Abhängigkeit von der Drehzahl $n_R$ der angetriebenen Räder automatisch geschaltet wird. Zur Erfassung der Drehzahl $n_R$ des angetriebenen Rades 15 dient ein Sensor 16, dessen Drehzahl-Signal über eine Signalleitung 17 einem Signaleingang 19 des Getriebesteuerung 18 zugeführt ist. Über einen Signalausgang 22 ist die Getriebesteuerung 18 mit den Signaleingängen 13 des Getriebes 12 und dem Signaleingang 10 der Kupplung 9 verbunden.

Wenn mittels der Getriebesteuerung 18 in Abhängigkeit von der Geschwindigkeit des Fahrzeugs und unter Berücksichtigung vorgegebener Auswahlkriterien ein neuer Gang festgelegt wird, wird die Kupplung 9 über ihren Signaleingang 10 betätigt und anschließend bei getrennter Kupplung das Getriebe 12 über seinen Signaleingang 13 von der Getriebesteuerung 18 umgeschaltet. Danach wird dann die Kupplung 9 wieder geschlossen. Die Steuerung bzw. Betätigung der Kupplung 9 und des Getriebes 12 können — wie oben angedeutet — auch rein mechanisch über Servomotoren erfolgen.

Zu den vorstehend erwähnten Auswahlkriterien, nach denen in der Getriebesteuerung 18 jeweils ein neuer Gang festgelegt wird, gehört im dargestellten Ausführungsbeispiel eine Überprüfung, ob nach dem Einlegen des an sich ausgewählten neuen Ganges ein ausreichender Momentenüberschuß zur Verfügung steht, oder ein genau bemessener Momentenabfall (Momentendefizit) nicht überschritten wird.

Bei dem erwähnten Vergleich der Antriebsmomente wird nicht das jeweilige stationäre Antriebsmoment direkt mit dem angemessenen Antriebsmoment des betreffenden neuen Ganges verglichen, sondern bei diesem Vergleich wird das stationäre Antriebsmoment entsprechend dem Übersetzungsverhältnis zwischen dem jeweils eingeschalteten und dem betreffenden neuen Gang transformiert. Daher ist im dargestellten Ausführungsbeispiel als Vergleichsgröße $M'_{stat}$ statt $M_{stat}$ angegeben. Es ist auch möglich, statt des stationären Antriebsmomentes bzw. des gemäß dem Übersetzungsverhältnis des Getriebes transformierten Wertes andere, von den Antriebsmomenten abgeleitete Größen wie z. B. Kräfte, Leistungen oder solche Vergleichsgrößen, die die Antriebsmoment lediglich als eine von mehreren Rechengrößen enthalten, miteinander zu vergleichen.

In einer ersten Vergleichseinrichtung 45 für den gerade gefahrenen Gang ist eine Grenzlinie für die Momentenkontrolle gespeichert. So ist beispielsweise der Momentenbereich für das stationäre Antriebsmoment $M_{stat} < 400$ einem Drehzahlbereich $n = 1\,500 \div 1\,600$ zugeordnet. Diese Zuordnung kann, je nach der im Einzelfall gewünschten Antriebsmomentenreserve, auch mit anderen Werten festgelegt werden, oder von den jeweils vorliegenden Fahrzuständen variabel gestaltet werden. Beim Vergleich wird zunächst geprüft, ob die aktuelle Motordrehzahl in den Bereich der gespeicherten Tabellenwerte für n fällt, beispielsweise $n = 1\,500 \div 1\,600$. Anschließend wird geprüft, ob das stationäre Antriebsmoment in den der Tabelle entsprechenden, der Drehzahl zugeordneten Momentenbereich, beispielsweise $M_{stat} < 400$, fällt. Ist dieses Kriterium erfüllt, wird über die Signalleitung 47 ein Signal an eine Sperreinrichtung 48 (UND-Glied) gegeben.

Bei der Sperreinrichtung 48 handelt es sich um ein übliches UND-Glied, das ein von einem Umschaltsignalgeber 52 über eine Leitung 50 abgegebenes Signal dann an eine Gangumschaltsteuerung 49 weiterleitet, wenn gleichzeitig auch ein Signal an der Leitung 47 ansteht.

In einer zweiten Vergleichseinrichtung 46 werden die stationären Antriebsmomente $M'_{stat}$ für den neu zu wählenden Gang mit gespeicherten Tabellenwerten verglichen. Sind die Kriterien erfüllt, wird über eine Signalleitung 51 ein Signal an die Sperreinrichtung 48 gegeben.

Wie mit dem Punkt 53 dargestellt, wird das Signal der zweiten Vergleichseinrichtung 46 am Eingang der Sperreinrichtung 48 jedoch negiert, so daß ein Signal vom Umschaltsignalgeber 52 an die Gangumschaltsteuerung 49 dann durchgelassen wird, wenn das Signal an der Leitung 51 nicht ansteht.

Alle in den beiden Vergleichseinrichtungen 45 und 46 gespeicherten Werte der Grenzlinien für die Momentenzumessung beziehen sich immer auf die in einem Motor-Kennfeldspeicher 36 abgelegten Werte.

Für die Berechnung oder Bestimmung des stationären Antriebsmomentes $M_{stat}$ oder einer daraus abgeleiteten stationären Antriebsgröße ist eine Momenten-Kontrolleinrichtung 24 vorgesehen, die die für den oben erwähnten Vergleich erforderliche stationäre Antriebsgröße $M_{stat}$ oder $M'_{stat}$ über eine Signalleitung 21 an die Getriebesteuerung 18 liefert, sofern die Getriebesteuerung 18 über eine Abfrage-Signalleitung 20 die entsprechende Größe abfragt. Damit ist gewährleistet, daß die Getriebesteuerung 18 nach der Auswahl eines oder mehrerer gemäß der Drehzahl $n_R$ des Rades 15 an sich zulässiger neuer Gänge für jeden dieser Gänge den Vergleich zwischen dem erforderlichen stationären Antriebsmomentes $M_{stat}$ und dem für den betreffenden neuen Gang optimal angemessenen Antriebsmoment vornimmt. Als Ergebnis wird dann der z. B. verbrauchsgünstigste neue Gang ausgewählt, der das Fahrzeug in jedem Fall so antreibt, daß es ohne nennenswerte Verzögerung weiterfährt, oder kein neuer Gang eingelegt, weil in keinem der an sich ausgewählten neuen Gänge eine Weiterfahrt des Fahrzeugs ohne nennenswerte Verzögerung gewährleistet ist.

In einer Momenten-Kontrolleinrichtung 24 wird das jeweilige stationäre Antriebsmoment $M_{stat}$ dadurch bestimmt, daß die Differenz zwischen dem tatsächlichen vom Motor 6 aufgebrachten jeweiligen momentanen Antriebsmoment $M_A$ des Fahrzeugs und einer solchen Rechengröße bestimmt wird, die sich als das Produkt aus dem Gewicht des Fahrzeugs und dem Rechenwert der momentanen Beschleunigung des Fahrzeugs ergibt. Um die erwähnte Differenz berechnen zu können, werden der Momenten-Kontrolleinrichtung 24 über einen Signaleingang 27 das transformierte momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt.

Der Signaleingang 27 der Momenten-Kontrolleinrichtung 24 ist über eine Leitung 34 an den Signalausgang 35 des Motor-Kennfeldspeichers 36 angeschlossen, der an dem Signalausgang 35 ein dem momentanen Antriebsmoment $M_A$ des Motors 6 entsprechendes Signal sur Verfügung stellt. Der Signaleingang 26 der Momenten-Kontrolleinrichtung 24 ist über eine Signalleitung 29 an eine Auswerteeinrichtung (Gewichtsermittlung) 30 zur Ermittlung des Gewichts des Fahrzeugs angeschlossen. Auf der Signalleitung 29 steht ein dem Gewicht des Fahrzeugs entsprechendes Signal zur Verfügung. Der Signaleingang 25 der Momenten-Kontrolleinrichtung 24 ist über die Signalleitung 17 mit dem Sensor 16 zur Erfassung der Rad-Drehzahl $n_R$ verbunden. In der Momenten-Kontrolleinrichtung 24 wird durch Differenzierung aus dem zeitlichen Verlauf der Drehzahl $n_R$ des Rades 15 die Beschleunigungsgröße $\ddot{s}$ des Fahrzeugs berechnet.

Das jeweilige momentane Antriebsmoment $M_A$ des Motors 6 wird aus dem Motor-Kennfeldspeicher 36 ermittelt, welches die Abhängigkeit der folgenden Größen voneinander enthält : momentanes Antriebsmoment $M_A$ des Motors 6, Drehzahl $n_A$ des Motors 6 und Steuergröße Y des Gebers 1 (Gaspedal). Im dargestellten Ausführungsbeispiel enthält der Speicher 36 für verschiedene Werte ($Y_1$, $Y_2$, $Y_3$) der Steuergröße Y des Gebers 1 je eine Kennlinie für die Abhängigkeit des momentanen Antriebsmomentes $M_A$ von der Drehzahl $n_A$.

Die Steuergröße y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Speichers 36 zugeführt, der so ausgebildet ist, daß er für jedes Wertepaar $y/n_A$ das momentane Antriebsmoment $M_A$ an seinem Signalausgang 35 zur Verfügung stellt. Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der in der älteren EP-A-111 636 bereits beschriebenen Gewichtsermittlung 30 zur Ermittlung des Gewichtes des Fahrzeugs wird das Verhältnis zwischen dem momentanen Antriebsmoment $M_A$ des Motors 6 und einer Differenz zweier Rechengrößen gebildet, wobei die erwähnten Rechengrößen jeweils eine der Beschleunigung des Fahrzeugs entsprechende Beschleunigungsgröße enthalten. Diese beiden Beschleunigungsgrößen $\ddot{s}_{x2}$ und $\ddot{s}_{x1}$ werden zu verschiedenen Zeiten ermittelt, wobei die eine Beschleunigungsgröße zu einem Zeitpunkt ermittelt wird, in dem sich das Fahrzeug in einem antriebslosen Zustand z. B. in einer Schaltpause befindet. In diesem antriebslosen Zustand wird das Fahrzeug nicht wesentlich beschleunigt oder verzögert. Um die erwähnte Rechenoperation durchführen zu können, wird der Gewichtsermittlung 30 über die Signalleitung 34 und einem Signaleingang 33 das momentane Antriebsmoment $M_A$ des Motors 6 zugeführt. Der zur Bildung der Beschleunigungsgrößen $\ddot{s}_{x2}$ und $\ddot{s}_{x1}$ erforderliche zeitliche Verlauf der Drehzahl $n_R$ des angetriebenen Rades 15 wird über die Signalleitung 17 einem Signaleingang 32 der Gewichtsermittlung 30 zugeführt. Über eine Signalleitung 23 wird einem Signaleingang 31 der Gewichtsermittlung 30 der Zeitpunkt mitgeteilt, in dem die Kupplung 9 getrennt ist. Damit wird zwischen solchen Zeiten, in denen das Fahrzeug dem Antrieb durch den Motor 6 unterliegt, und solchen Zeiten, in denen das Fahrzeug nicht dem Antrieb des Motors 6 unterliegt, unterschieden. Zu diesen unterschiedlichen Zeiten werden auch die Beschleunigungsgrößen $\ddot{s}_{x2}$ und $\ddot{s}_{x1}$ gemessen bzw. bestimmt.

Die allgemeine Formel zur Ermittlung des Fahrzeuggewichtes G lautet :

$$G = M_{A1} - M_{A2}/f\ (\ddot{s}_{x1}) - f\ (\ddot{s}_{x2})\ .$$

Werte mit Index 1 sind zum Zeitpunkt 1 und Werte mit Index 2 sind zum Zeitpunkt 2 ermittelt.

Neben dem oben beschriebenen Sonderfall $M_{A2} = 0$, der für die Schaltpause gilt, kann auch der Sonderfall $f\ (\ddot{s}_{x2}) = 0$ ausgewertet werden. Dieser gilt für unbeschleunigte Fahrt.

Die obige Gleichung kann auch allgemein, ohne die Sonderfälle abzuwarten, ausgewertet werden. Dabei ist darauf zu achten, daß die beiden Meßpunkte nicht zu weit auseinander liegen. Um eine ausreichende Genauigkeit für die Gewichtsgröße zu erhalten, sollte die Differenz der Antriebsmomente $M_{A1} - M_{A2}$ möglichst groß gewählt werden.

Die Gewichtsermittlung 30 kann auch so ausgebildet sein, daß verschiedene ermittelte Gewichtsgrößen zur Bildung eines Mittelwertes für die Gewichtsgrößen verwendet werden und daß dieser Mittelwert seinerseits zur Anzeige oder Bestimmung des Gewichtes des Fahrzeugs herangezogen wird. In diesem Fall wird also der Momenten-Kontrolleinrichtung 24 ein Gewichts-Mittelwert zugeführt.

Es können auch Mittel vorgesehen sein, die nur solche Gewichtsgrößen oder nur solche Mittelwerte der Gewichtsgrößen zur Auswertung kommen lassen, die eine vorgegebene Abweichung von einem vorgegebenen Wert oder einem früher ermittelten Wert der Gewichtsgrößen nicht überschreiten.

Um sicherzustellen, daß auch dann, wenn in der Auswerteeinrichtung 30 z. B. wegen zu kurzer Fahrzeit noch kein ausreichend genauer Wert für die Gewichtsgröße G vorliegt, in der Momenten-Kontrolleinrichtung 24 ein brauchbarer Wert für das stationäre Antriebsmoment $M_{stat}$ bestimmt werden kann, ist es vorteilhaft, statt der von der Auswerteeinrichtung 30 ermittelten Gewichtsgrößen G zunächst eine mittlere Gewichtsgröße $G_0$ zu verwenden, die z. B. einem halbbeladenen Fahrzeug entspricht.

Für eine sichere Bestimmung und Berechnung der Gewichtsgröße G eignet sich in vorteilhafter Weise ein in der Gewichtsermittlung 30 vorgesehener Mikrocomputer, mit dem insbesondere auch die zeitabhängigen Rechenvorgänge bezüglich der Beschleunigungsgrößen auf einfache Weise realisiert werden können.

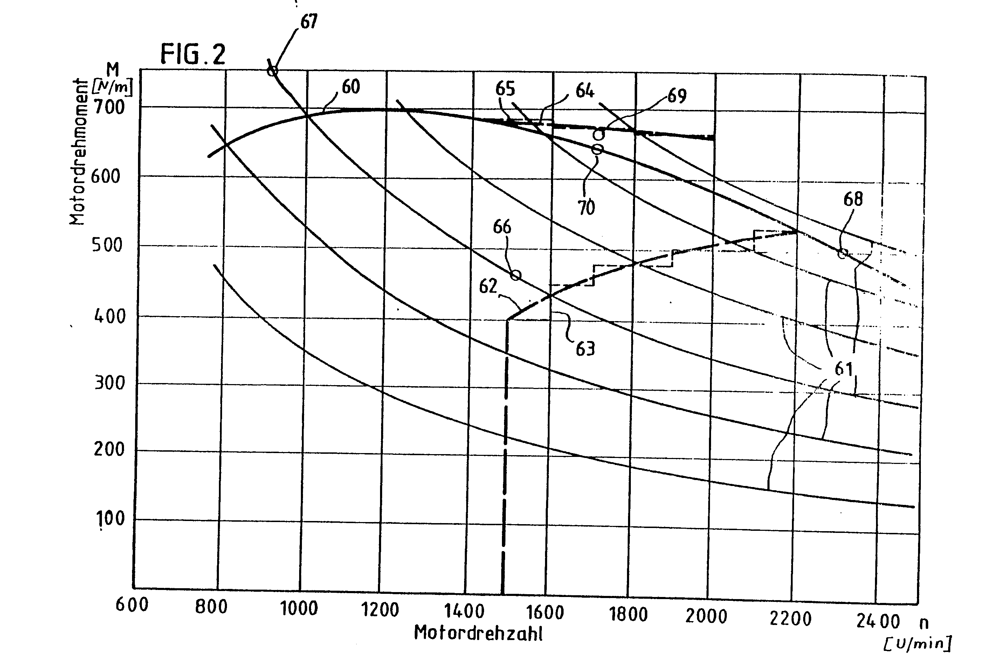

Das in der Fig. 2 dargestellte Diagramm zeigt ein übliches Motor-Kennlinienfeld. Im Diagramm zeigt die Linie 60 für einen Dieselmotor den Verlauf der maximalen Antriebsmomente des Motors bei den verschiedenen Motordrehzahlen. Die Hilfslinien 61 sind Hyperbeln und veranschaulichen, wohin der Motorbetriebspunkt wandert, wenn eine andere als die gerade gefahrene Getriebeübersetzung gewählt wird. Die Linien 62 und 64 sind die nach bestimmten Kriterien vorgegebenen Grenzlinien, mit der das stationäre Antriebsmoment $M_{stat}$ verglichen wird. Die gestuften Linien 63 und 65 dienen zur Nachbildung der Linien 62 und 64.

Es sei angenommen, daß der Motor im Betriebspunkt 66 betrieben würde. Die Motordrehzahl im nächsthöheren Gang (Betriebspunkt 67) läge dann im angenommenen Fall um n = 600 tiefer, also bei n = 900.

Möchte man im nächsthöheren Gang das gleiche stationäre Antriebsmoment haben, dann würde der neue Motorbetriebspunkt an der Hyperbel 61 entlang in den Betriebspunkt 67 wandern. Das bedeutet, daß beim Umschalten in diesen Gang mit einer Leistungseinbuße zu rechnen wäre. Ist diese nicht akzeptabel, dann muß eine Umschaltung gesperrt werden, wenn der alte Motorbetriebspunkt 66 oberhalb der empirisch festgelegten Linie 62 liegt. Dies ist bei dem vorliegenden Beispiel der Fall, der bereits erwähnte Momentenüberschuß steht hier nicht zur Verfügung.

Die Linie 62 kann nun, wie im dargestellten Fall, so festgelegt sein, daß beim Umschalten in einen höheren Gang mindestens noch das stationäre Antriebsmoment $M_{stat}$ zur Verfügung steht, das im gefahrenen Gang vorhanden ist. Die Linie 62 kann aber auch nach den verschiedensten Erfordernissen eine andere Lage und einen anderen Verlauf aufweisen, oder aber auch direkt abhängig von Fahrparametern verschoben werden. So ist es beispielsweise zweckmäßig, eine Verschiebung der Grenzlinie 62 für die Leistungszumessung zu höheren Motordrehzahlen mit geringeren Motordrehmomenten vorzunehmen, wenn eine größere Steigung zu befahren ist, wenn der Beladungszustand des Fahrzeugs einen festgelegten Wert überschreitet, oder auch die Linie 62 abhängig von einem vom Fahrer des Fahrzeugs zu wählenden Fahrprogramm zu größeren Motordrehzahlen und kleineren Motordrehmomenten zu verschieben, um somit mehr Drehmoment zur Verfügung zu stellen und eine zügigere Fahrweise zu ermöglichen.

In ähnlicher Weise kann eine Grenzlinie 64 festgelegt werden, mit der das stationäre Antriebsmoment

$M'_{stat}$ im höheren Gang verglichen wird und die oberhalb der maximalen Drehmomentenlinie 60 liegt. Wird der Motor beispielsweise im Punkt 68 betrieben, dann wird der Kraftstoffverbrauch relativ hoch sein, da der Motor sehr hochtourig läuft. Der Betriebspunkt im nächsthöheren Gang läge beispielsweise im Punkt 69, also oberhalb der maximalen Drehmomentenlinie 60. Er würde beim Umschalten auf den Punkt 70 absinken. Dieses bedeutet also eine geringe Drehmomenteneinbuße, die im dargestellten Fall aber akzeptabel sein würde, da sich ein geringerer Kraftstoffverbrauch ergeben würde. Die Grenzlinie 64 ist im dargestellten Fall so festgelegt, daß sich beim Umschalten in einen höheren Gang zwar eine geringe Momenteneinbuße einstellt, dieses aber einen wesentlich besseren Kraftstoffverbrauch ergibt. Der bereits erwähnte genau bemessene Momentenabfall wird hier nicht überschritten.

Aus der Beschreibung der Vorgänge im Diagramm ist zu ersehen, daß die Leistungszumessung sehr genau erfolgen muß, um Fehlschaltungen zu verhindern. Der Vorteil der vorgeschlagenen Schaltung ergibt sich dadurch, daß alle Betriebspunkte innerhalb desselben Diagramms bestimmt werden. Würden z. B. die Antriebsmomentenwerte der im Diagramm angegebenen Linie 60 für die maximalen Motormomente aufgrund irgendwelcher äußeren Einflüsse vom Motor nicht erreicht und um einen bestimmten Faktor kleiner sein, dann würde dieser Faktor auch für alle übrigen, unter anderem auch für die Betriebspunkte 66, 67, 68, 69 und 70 gelten. Das bedeutet dann aber, daß die Relation der Betriebspunkte 66, 67, 68, 69 und 70 zur Linie 60 der maximalen Momente erhalten bliebe und die Vergleichseinrichtungen 45 und 46 ein fehlerfreies, brauchbares Ergebnis liefern.

**Patentansprüche**

1. Kontrolleinrichtung für ein von einem Motor über ein die Übersetzung vorzugsweise stufenweise variierendes Getriebe angetriebenes Fahrzeug mit folgenden Merkmalen :

a) Es ist ein Motor-Kennfeldspeicher (36) zur Ermittlung des vom Motor (6) abgegebenen momentanen Antriebsmomentes $M_A$ vorgesehen ;

b) es ist ein die Drehzahl $n_R$ wenigstens eines Fahrzeugrades (15) erfassender Sensor (16) vorgesehen, dessen Ausgangssignal einer Differenziereinrichtung zur Bestimmung einer aus dem zeitlichen Verlauf der Drehzahl $n_R$ des Fahrzeugrades (15) abgeleiteten Beschleunigungsgröße $\ddot{s}$ zugeführt werden kann ;

c) es ist eine Gewichtsermittlung (30) zur Berechnung des Fahrzeuggewichts unter Zuhilfenahme des momentanen Antriebsmomentes $M_A$ und der Beschleunigungsgröße $\ddot{s}$ vorgesehen ;

d) es ist eine Momenten-Kontrolleinrichtung (24) zur Berechnung eines stationären Antriebsmomentes $M_{stat}$, das zur beschleunigungslosen Fahrt des Fahrzeugs erforderlich ist, unter Zuhilfenahme des momentanen Momentes $M_A$, des Fahrzeuggewichts G und der Beschleunigungsgröße $\ddot{s}$ vorgesehen ;

e) es ist eine Getriebesteuerung (18) mit einer ersten Vergleichseinrichtung (45) vorgesehen, in welcher für verschiedene Motordrehzahl-Bereiche geprüft wird, ob das vorliegende stationäre Moment $M_{stat}$ im Motor-Kennlinienfeld unterhalb einer empirisch ermittelten Grenzlinie (62) liegt, wobei die Grenzlinie (62) derart gelegt ist, daß beim Hochschalten in den nächsthöheren Gang das dann erforderliche stationäre Moment $M'_{stat}$ unterhalb einer Linie (60) des maximalen Antriebsmoments liegt, und daß nur in diesem Fall ein Hochschalten zugelassen wird.

2. Kontrolleinrichtung nach Anspruch 1, dadurch gekennzeichnet, daß die Getriebesteuerung (18) eine zweite Vergleichseinrichtung (46) enthält, in welcher für verschiedene Motordrehzahl-Bereiche geprüft wird, ob das für den nächsthöheren Gang notwendige stationäre Moment $M'_{stat}$ im Motor-Kennlinienfeld über einer empirisch ermittelten Grenzlinie (64) liegt, welche oberhalb der Linie (60) des maximalen Antriebsmomentes verläuft, und daß in diesem Fall ein Hochschalten nicht zugelassen wird.

3. Kontrolleinrichtung nach Anspruch 1 oder 2, gekennzeichnet durch die folgenden Merkmale :

a) es ist ein die Drehzahl $n_A$ des Motors (6) erfassender Sensor (7) vorgesehen :

b) es ist ein Geber zur Erzeug einer Motor-Steuergröße y vorgesehen ;

c) der Motor-Kennfeldspeicher (36) enthält eine Kennlinienschar, die die gegenseitige Abhängigkeit von Motor-Drehzahl $n_A$, Motor-Steuergröße y und momentanem Moment $M_A$ wiedergibt ;

d) ein Signalausgang (35) des Speichers (36) für das momentane Moment $M_A$ ist mit einem zugeordneten Signaleingang (27) der Momenten-Kontrolleinrichtung (24) verbunden.

4. Kontrolleinrichtung nach Anspruch 3 für ein Fahrzeug mit einem als Brennkraftmaschine ausgebildeten Motor (6), der über ein Gaspedal gesteuert wird, dadurch gekennzeichnet, daß der Geber (1) als Gaspedal ausgebildet ist.

5. Kontrolleinrichtung nach wenigstens einem der Ansprüche 1 bis 4, dadurch gekennzeichnet, daß

a) die Gewichtsermittlung (30) unter Verwertung des momentanen Momentes $M_A$ und mehrerer, zu verschiedenen Zeitpunkten $X_1$, $X_2$ ermittelter Werte der Beschleunigungsgröße $\ddot{s}$ eine dem Gewicht des Fahrzeugs entsprechende Gewichtsgröße G nach der Formel

$$G = M_A/f(\ddot{s}_{X2}) - f(\ddot{s}_{X1}).$$

b) ermittelt, wobei wenigstens einer der von der Gewichtsermittlung (30) zu verwertenden Werte der Beschleunigungsgröße $\ddot{s}$ zu einem Zeitpunkt ermittelt wird, in dem das Fahrzeug dem Antrieb durch den Motor (6) unterliegt, und wobei wenigstens einer der von der Gewichtsermittlung (30) zu verwertenden Werte der Beschleunigungsgröße š zu einem Zeitpunkt ermittelt wird, in dem sich das Fahrzeug in einem antriebslosen Zustand befindet.

6. Kontrolleinrichtung nach wenigstens einem der Ansprüche 1 bis 5 für ein Fahrzeug mit einer Kupplung zur Trennung der angetriebenen Fahrzeugräder vom Antriebsstrang des Fahrzeugs, gekennzeichnet durch folgende Merkmale :

a) die Kupplung (9) ist mit einem Steuereingang (10) zum Steuern der Kupplungsbetätigung versehen ;

b) der Steuereingang (10) der Kupplung (9) ist mit einem Steuerausgang (22) der Getriebesteuerung (18) verbunden ;

c) die Getriebesteuerung (18) erzeugt dann ein Steuersignal zur Trennung der Kupplung (9), wenn der dem antriebslosen Zustand des Fahrzeugs zugeordnete Wert der Beschleunigungsgröße š ermittelt wird.

7. Kontrolleinrichtung nach Anspruch 5, dadurch gekennzeichnet, daß die Ermittlung der Gewichtsgröße G wiederholt vorgenommen wird.

8. Kontrolleinrichtung nach Anspruch 7, dadurch gekennzeichnet, daß verschiedene ermittelte Gewichtsgrößen G zur Bildung eines Mittelwertes für die Gewichtsgröße G verwendet werden und daß dieser Mittelwert zur Anzeige oder Bestimmung des Gewichts des Fahrzeugs herangezogen wird.

9. Kontrolleinrichtung nach Anspruch 7 bis 8, dadurch gekennzeichnet, daß Mittel vorgesehen sind, die nur solche Gewichtsgrößen G zur Auswertung kommen lassen, die eine vorgegebene Abweichung von einem vorgegebenen Wert oder einem früher ermittelten Wert der Gewichtsgrößen G nicht überschreitet.

10. Kontrolleinrichtung nach Anspruch 7 bis 9, dadurch gekennzeichnet, daß insbesondere nach einer Veränderung des Fahrzeuggewichts für die erste Ermittlung der Gewichtsgröße G ein festegelegter vorgegebener Wert der Gewichtsgröße G herangezogen wird.

11. Kontrolleinrichtung nach wenigstens einem der Ansprüche 1 bis 10, dadurch gekennzeichnet, daß die Momenten-Kontrolleinrichtung (24) eine Recheneinrichtung zur Berechnung der Differenz zwischen dem momentanen Antriebsmoment $M_A$ und dem Produkt aus Gewicht G und Beschleunigungsgröße š nach der Formel :

$$M_{stat} = M_A — G \cdot f(š)$$

enthält.

12. Kontrolleinrichtung nach wenigstens einem der Ansprüche 1 bis 11, dadurch gekennzeichnet, daß das stationäre Antriebsmoment $M_{stat}$ ständig ermittelt wird.

13. Kontrolleinrichtung nach wenigstens einem der Ansprüche 1 bis 12, dadurch gekennzeichnet, daß das stationäre Antriebsmoment $M'_{stat}$ für weitere Gänge unter Berücksichtigung der Getriebe-Übersetzung nach der Formel

$$M'_{stat} = M_{stat} \cdot i/i'$$

berechnet wird, wobei bedeuten :

$M_{stat}$ = stationäres Moment im alten Gang
$M'_{stat}$ = stationäres Moment im neuen Gang
$i$ = Übersetzung im alten Gang
$i'$ = Übersetzung im neuen Gang

14. Kontrolleinrichtung nach Anspruch 1, dadurch gekennzeichnet, daß die Grenzlinie (62) waagerecht verläuft.

15. Kontrolleinrichtung nach Anspruch 1, dadurch gekennzeichnet, daß die Grenzlinie (62) ansteigt oder abfällt.

16. Kontrolleinrichtung nach wenigstens einem der Ansprüche 1 bis 15, dadurch gekennzeichnet, daß die Grenzlinien (62, 64) abhängig von einem vom Fahrer zu beeinflussenden Fahrbetriebsprogramm sind.

17. Kontrolleinrichtung nach mindestens einem der Ansprüche 1 bis 16, dadurch gekennzeichnet, daß die Grenzlinien (62, 64) abhängig von der befahrenen Steigung sind.

18. Kontrolleinrichtung nach mindestens einem der Ansprüche 1 bis 17, dadurch gekennzeichnet, daß die Grenzlinien (62, 64) abhängig vom Gangbereich sind.

19. Kontrolleinrichtung nach mindestens einem der Ansprüche 1 bis 18, dadurch gekennzeichnet, daß die Grenzlinien (62, 64) abhängig vom Gewicht des Fahrzeugs sind.

20. Kontrolleinrichtung nach mindestens einem der Ansprüche 1 bis 19, dadurch gekennzeichnet, daß die Grenzlinien (62, 64) über der Drehzahl abschnittweise mit konstanten Momentenwerten gespeichert sind.

21. Kontrolleinrichtung nach mindestens einem der Ansprüche 1 bis 20, dadurch gekennzeichnet, daß die Werte der Grenzlinien (62, 64) abgestimmt sind auf die im Motor-Kennfeldspeicher (36) gespeicherten Werte.

22. Kontrolleinrichtung nach mindestens einem der Ansprüche 1 bis 21, dadurch gekennzeichnet, daß eine Sperreinrichtung (48) vorgesehen ist, die das Einlegen eines neuen Ganges verhindert, wenn die zweite Vergleichseinrichtung (46) ein Steuersignal abgibt oder wenn die erste Vergleichseinrichtung (45) kein Steuersignal abgibt.

23. Kontrolleinrichtung nach den Ansprüchen 1 bis 22, dadurch gekennzeichnet, daß zur Ausführung der Berechnungen mindestens ein Mikrocomputer verwendet wird.

## Claims

1. Control device for a vehicle driven by a motor by way of a transmission that preferably changes the transmission ratio in steps, which device has the following features.

a) there is provided a store (36) recording the characteristics of the motor for ascertaining the instantaneous driving torque $M_A$ delivered by the motor;

b) there is provided a sensor (16) registering the number of revolutions per minute $n_R$ of at least one vehicle wheel (15) of which the output signal can be fed to a differentiating device for ascertaining a magnitude $\ddot{s}$ of acceleration derived from the variation with time of the number of revolutions per minute $n_R$ of the vehicle wheel (15);

c) there is provided a weight-assessment means (30) for calculating the weight of the vehicle from the instanteneous driving torque $M_A$ and the magnitude $\ddot{s}$ of acceleration;

d) there is provided a torque-control device (24) for calculating a steady driving torque $M_{stat}$, which is necessary for driving the vehicle without acceleration, from the instantaneous torque $M_A$, the vehicle weight G and the magnitude $\ddot{s}$ of acceleration.

e) there is provided a transmission-control means (18) with a first comparison device (45) in which for different ranges of numbers of revolutions per minute of the motor the particular steady torque $M_{stat}$ is tested to ascertain whether it lies below an empirically determined limiting line (62) in the motor characteristics, the limiting line being so placed that, on shifting up into the next higher gear, the steady torque $M'_{stat}$ then required lies below a line (60) of the maximum driving torque, and that only in this case is shifting up permitted.

2. Control device according to claim 1, characterised in that the transmission-control means (18) contains a second comparison device (46) in which, for different ranges of number of revolutions per minute of the motor, the steady torque $M'_{stat}$ necessary for the next higher gear is tested to ascertain whether it lies above another empirically determined limiting line (64) in the motor characteristics, which line extends above the lines (60) of the maximum driving torque, and that in this case shifting up is not permitted.

3. Control device according to claim 1 or 2, characterised by the following features:

a) there is provided a sensor (7) registering the number of revolutions per minute $n_A$ of the motor (6);

b) there is provided a transmitter for producing a motor-control magnitude y;

c) the store (36) recording the characteristics of the motor contains a family of characteristics which represents the relationship between the number of revolutions per minute $n_A$ of the motor, the motorcontrol magnitude y and the instantaneous torque $M_A$;

d) a signal output (35) of the store (36) representing the instantaneous torque $M_A$ is connected to an associated signal input (27) of the torque-control device (24).

4. Control device according to claim 3 for a vehicle with a motor (6), in the form of an internal combustion engine, which is controlled by an accelerator pedal, characterised in that the transmitter (1) is formed as the accelerator pedal.

5. Control device according to at least one of claims 1 to 4, characterised in that

a) the weight-assessment means (30), using the instantaneous torque $M_A$ and several values of the acceleration magnitude $\ddot{s}$ ascertained at different times $X_1$, $X_2$, determines a weight magnitude G corresponding to the weight of the vehicle in accordance with the formula

$$G = M_A/f(\ddot{s}_{X2}) - f(\ddot{s}_{X1}).$$

b) at least one of the values of the acceleration magnitude $\ddot{s}$ to be used by the weight-assessment means (30) being ascertained at a point in time at which the vehicle is being driven by the motor (6), and at least one of the values of the acceleration magnitude $\ddot{s}$ to be used the weight-assessment means (30) being ascertained at a point in time at which the vehicle is not being driven by the motor.

6. Control device according to at least one of claims 1 to 5 for a vehicle with a clutch for disengaging the driven vehicle wheels from the drive line of the vehicle, characterised by the following features:

a) the clutch (9) is provided with a control input (10) for controlling the operation of the clutch;

b) the control input (10) of the clutch (9) is connected to a control output (22) of the transmission-control means;

9

c) the transmission-control means (18) produces a control signal for disengaging the clutch (9) while the value of the acceleration magnitude $\ddot{s}$ associated with the non-driven state of the vehicle is ascertained.

7. Control device according to claim 5, characterised in that the weight magnitude G is repeatedly ascertained.

8. Control device according to claim 7, characterised in that the different weight magnitudes G ascertained are used to obtain a mean value for the weight magnitude G and this mean value is used to indicate or determine the weight of the vehicle.

9. Control device according to claim 7 to 8, characterised in that means are provided that permit use of only those weight magnitudes G that do not exceed a predetermined deviation from a predetermined value or from a previously ascertained value of the weight magnitudes G.

10. Control device according to claims 7 to 9, characterised in that especially after a change in the weight of the vehicle, a fixed predetermined value of the weight magnitude G is used for the first assessment of the weight magnitude G.

11. Control device according to at least one of claims 1 to 10, characterised in that the torque-control device (24) contains a calculating device for calculating the difference between the instantaneous driving torque $M_A$ and the product of the weight G and the acceleration magnitude $\ddot{s}$ in accordance with the formula :

$$M_{stat} = M_A - G \cdot f(\ddot{s}).$$

12. Control device according to at least one of claims 1 to 11, characterised in that the steady driving torque $M_{stat}$ is continually ascertained.

13. Control device according to at least one of claims 1 to 12 characterised in that the steady driving torque $M'_{stat}$ is calculated for other gears, taking into account the transmission ratio, in accordance with the formula

$$M'_{stat} = M_{stat} \cdot i/i'$$

in which

$M_{stat}$ = steady torque in the previous gear
$M'_{stat}$ = steady torque in the new gear
$i$ = transmission ratio of the old gear
$i'$ = transmission ratio of the new gear.

14. Control device according to claim 1, characterised in that the limiting line (62) extends horizontally.

15. Control device according to claim 1, characterised in that the limiting line (62) slopes up or down.

16. Control device according to at least one of claims 1 to 15, characterised in that the limiting lines (62, 64) are dependent on a drive operation programme that can be controlled by the driver.

17. Control device according to at least one of claims 1 to 16, characterised in that the limiting lines (62, 64) are dependent on the gradient.

18. Control device according to at least one of claims 1 to 17, characterised in that the limiting lines (62, 64) are dependent on the gear range.

19. Control device according to at least one of claims 1 to 18, characterised in that the limiting lines (62, 64) are dependent on the weight of the vehicle.

20. Control device according to at least one of claims 1 to 19, characterised in that the limiting lines (62, 64) are stored in portions of constant torque values with reference to the number of revolutions per minute.

21. Control device according to at least one of claims 1 to 20, characterised in that the values of the limiting lines (62, 64) are coordinated with the values stored in the store (36) recording the characteristics of the motor.

22. Control device according to at least one of claims 1 to 21, characterised in that a blocking device (48) is provided which prevents the engagement of a new gear if the second comparison device (46) delivers a control signal or if the first comparison device (45) does not deliver a control signal.

23. Control device according to claims 1 to 22, characterised in that at least one microcomputer is used to carry out the calculations.

**Revendications**

1. Dispositif de commande d'un véhicule propulsé par un moteur via une transmission présentant de préférence une variation discontinue, caractérisé en ce que :

a) une mémoire (36) de réseau de caractéristiques du moteur est prévue pour la détermination du couple instantané $M_A$ délivré par le moteur (6) ;

b) un capteur (16) décelant la vitesse de rotation $n_R$ d'une roue (15) du véhicule au moins est prévu, dont le signal de sortie peut être appliqué à un différentiateur pour la détermination d'une grandeur d'accélération s̈ dérivée de la variation temporelle de la vitesse de rotation $n_R$ de la roue (15) du véhicule ;

c) un dispositif traducteur (30) est prévu pour le calcul du poids du véhicule à l'aide du couple instantané $M_A$ et de la grandeur d'accélération s̈ ;

d) un dispositif de contrôle du couple (24) est prévu pour le calcul d'un couple stationnaire $M_{stat}$ nécessaire au déplacement du véhicule sans accélération, à l'aide du couple instantané $M_A$, du poids G du véhicule et de la grandeur d'accélération s̈ ; et

e) une commande (18) de la boîte de vitesses est prévue, avec un premier comparateur (45) qui contrôle pour diverses plages de vitesse de rotation du moteur si le couple stationnaire $M_{stat}$ existant se situe au-dessous d'une courbe limite (62) déterminée empiriquement sur le réseau de caractéristiques du moteur, ladite courbe limite (62) étant fixée de façon que le couple stationnaire $M'_{stat}$ nécessaire lors du passage à la vitesse immédiatement supérieure se situe au-dessous d'une courbe (60) du couple maximal, et qu'une montée de vitesse ne soit possible que dans ce cas.

2. Dispositif de commande selon la revendication 1, caractérisé en ce que la commande (18) de la boîte de vitesses comprend un second comparateur (46) qui contrôle pour diverses plages de vitesse de rotation du moteur si le couple stationnaire $M'_{stat}$ nécessaire pour le passage à la vitesse immédiatement supérieure se situe au-dessus d'une courbe limite empirique (64) sur le réseau de caractéristiques du moteur, ladite courbe limite (64) se situant au-dessous de la courbe (60) du couple maximal, et qu'une montée de vitesse ne soit permise que dans ce cas.

3. Dispositif de commande selon une des revendications 1 ou 2, caractérisé en ce que :

a) un capteur (7) est prévu pour déceler la vitesse de rotation $n_A$ du moteur (6) ;

b) un transmetteur est prévu pour délivrer une grandeur y de commande du moteur ;

c) la mémoire (36) du réseau de caractéristiques du moteur contient une famille de courbes représentant la relation entre la vitesse de rotation $n_A$ du moteur, la grandeur de commande y du moteur et le couple instantané $M_A$ ; et

d) une sortie de signal (35) de la mémoire (36) du couple instantané $M_A$ est reliée à une entrée de signal correspondante (27) du dispositif de contrôle du couple (24).

4. Dispositif de commande selon la revendication 3, pour un véhicule équipé d'un moteur à combustion interne (6) commandé par une pédale d'accélération, ledit dispositif étant caractérisé en ce que le transmetteur (1) est réalisé sous forme d'une pédale d'accélération.

5. Dispositif de commande selon une quelconque des revendications 1 à 4, caractérisé en ce que :

a) le dispositif traducteur (30) détermine, à l'aide du couple instantané $M_A$ et de valeurs de la grandeur d'accélération s̈ déterminées à des instants différents $X_1$, $X_2$, une grandeur de poids G correspondant au poids du véhicule selon la formule :

$$G = M_A/f(\ddot{s}_{X1}) - f(\ddot{s}_{X2})$$

et

b) une au moins des valeurs de la grandeur d'accélération s̈ à traduire par le dispositif (30) est déterminée à un instant où le véhicule est propulsé par le moteur (6), et une au moins des valeurs de la grandeur d'accélération s̈ à traduire par le dispositif (30) est déterminée à un instant où le véhicule n'est pas propulsé.

6. Dispositif de commande selon une quelconque des revendications 1 à 5, destiné à un véhicule équipé d'un embrayage isolant les roues motrices de la chaîne cinématique et caractérisé en ce que :

a) l'embrayage (9) est muni d'une entrée (10) pour la commande de son actionnement ;

b) l'entrée de commande (10) de l'embrayage (9) est reliée à une sortie de commande (22) de la commande (18) de la boîte de vitesses ; et

c) la commande (18) de la boîte de vitesses délivre un signal de commande pour l'isolement de l'embrayage (9) quand la valeur de la grandeur d'accélération s̈ affectée à l'état non propulsé du véhicule est déterminée.

7. Dispositif de commande selon la revendication 5, caractérisé en ce que la détermination de la grandeur de poids G est répétée.

8. Dispositif de commande selon la revendication 7, caractérisé en ce que diverses grandeurs de poids G déterminées sont utilisées pour la formation d'une valeur moyenne de la grandeur de poids G ; et la valeur moyenne est utilisée pour l'indication ou la détermination du poids du véhicule.

9. Dispositif de commande selon les revendications 7 et 8, caractérisé par des moyens qui provoquent uniquement la traduction des grandeurs de poids G ou de valeurs moyennes de ces dernières ne dépassant pas une valeur prédéterminée ou une valeur précédemment déterminée des grandeurs de poids G.

10. Dispositif de commande selon les revendications 7 à 10, caractérisé en ce qu'une valeur prédéterminée fixe de la grandeur de poids G est utilisée pour la première détermination de la grandeur de poids G, en particulier après une variation du poids du véhicule.

11. Dispositif de commande selon une quelconque des revendications 1 à 10, caractérisé en ce que le dispositif de contrôle du couple (24) comprend un dispositif de calcul de la différence entre le couple instantané $M_A$ et le produit du poids G par la grandeur d'accélération š selon la formule :

$$M_{stat} = M_A — G \cdot f(š).$$

12. Dispositif de commande selon une quelconque des revendications 1 à 11, caractérisé par une détermination permanente du couple stationnaire $M_{stat}$.

13. Dispositif de commande selon une quelconque des revendications 1 à 12, caractérisé en ce que le couple stationnaire $M'_{stat}$ est calculé pour d'autres vitesses, compte tenu du rapport de la boîte, selon la formule :

$$M'_{stat} = M_{stat} \cdot i/i'$$

avec :

$M_{stat}$ = couple stationnaire à l'ancienne vitesse
$M'_{stat}$ = couple stationnaire à la nouvelle vitesse
i = rapport à l'ancienne vitesse
i' = rapport à la nouvelle vitesse.

14. Dispositif de commande selon la revendication 1, caractérisé en ce que la courbe limite (62) est horizontale.

15. Dispositif de commande selon la revendication 1, caractérisé en ce que la courbe limite (62) est croissante ou décroissante.

16. Dispositif de commande selon une quelconque des revendications 1 à 15, caractérisé en ce que les courbes limites (62, 64) dépendent d'un programme de conduite fixé par le conducteur.

17. Dispositif de commande selon une quelconque des revendications 1 à 16, caractérisé en ce que les courbes limites (62, 64) dépendent de la pente parcourue.

18. Dispositif de commande selon une quelconque des revendications 1 à 17, caractérisé en ce que les courbes limites (62, 64) dépendent de la plage de vitesse correspondant au rapport choisi.

19. Dispositif de commande selon une quelconque des revendications 1 à 18, caractérisé en ce que les courbes limites (62, 64) dépendent du poids du véhicule.

20. Dispositif de commande selon une quelconque des revendications 1 à 19, caractérisé en ce que les courbes limites (62, 64) sont mémorisées par secteurs à couple constant en fonction de la vitesse de rotation.

21. Dispositif de commande selon au moins une des revendications 1 à 20, caractérisé en ce que les valeurs des courbes limites (62, 64) sont accordées aux valeurs mémorisées dans la mémoire (36) du réseau de caractéristiques du moteur.

22. Dispositif de commande selon au moins une des revendications 1 à 21, caractérisé en ce qu'il comporte un dispositif de blocage (48) qui empêche l'enclenchement d'une nouvelle vitesse lorsque le second comparateur (46) délivre un signal de commande ou lorsque le premier comparateur (45) ne délivre pas de signal de commande.

23. Dispositif de commande selon les revendications 1 à 22, caractérisé par l'utilisation d'au moins un micro-ordinateur pour effectuer les calculs.

FIG. 1

FIG.2

Motordrehmoment M [N/m]

Motordrehzahl — n [U/min]

0 120 190